# EUROPEAN PATENT APPLICATION

(11) **EP 4 796 949 A1**
(43) Date of publication of application: **26.08.2026**
(21) Application number: 24888005.6
(22) Date of filing: 06.11.2024
(51) Int. Cl.: G01S 5/10, H04W 64/00

(54) **TERMINAL POSITIONING METHOD, TERMINAL, AND COMPUTER READABLE STORAGE MEDIUM**

(30) Priority: 07.11.2023 CN 202311485427
(71) Applicant: ZTE CORPORATION, Shenzhen, Guangdong 518057 (CN)
(72) Inventor: XUE, Bing, Shenzhen, Guangdong 518057 (CN); CHEN, Dawei, Shenzhen, Guangdong 518057 (CN)
(74) Representative: Canzler & Bergmeier Patentanwälte Partnerschaft mbB
(86) International application number: PCT/CN2024/130233
(87) International publication number: WO 2025/098394

(57) **Abstract**

The present disclosure provides a terminal positioning method, comprising: acquiring, from reference signals sent by at least one reference base station, the first positioning data of a target terminal corresponding to each reference base station, wherein the first positioning data represents a location relationship between the target terminal and the reference base station, and the reference signals are sent by the reference base station by means of a communication satellite operating within a preset altitude range; and determining location information of the target terminal on the basis of the first positioning data and second positioning data of a preset reference terminal, wherein the preset reference terminal is a predetermined terminal having a fixed location, and the second positioning data represents a location relationship between the preset reference terminal and the reference base station. The present disclosure further provides a terminal and a computer readable storage medium.

## Description

### CROSS REFERENCE TO RELATED APPLICATIONS

The present disclosure claims the priority to Chinese Patent Application No. 202311485427.0 filed on November 7, 2023, the contents of which are incorporated herein by reference in their entirety.

### TECHNICAL FIELD

The present disclosure relates to the technical field of communications, and in particular, to a terminal positioning method, a terminal, and a computer readable storage medium.

### BACKGROUND

At present, broadband satellite networks perform data processing and transmission via communication satellites. The communication satellites can position terminals by a GPS (Global Positioning System)-like pseudo code positioning method or an RTL (Return To Launch)-like Doppler Shift positioning method. However, algorithms used in these methods for positioning the terminals involve excessive computational complexity, and all these methods can hardly utilize existing 5th Generation Mobile Communication Technology (5G) or 6th Generation Mobile Communication Technology (6G) and thus are difficult to be compatible with terrestrial 5G or 6G systems, resulting in hard for achieving a space-ground integrated network.

### SUMMARY

In a first aspect, the present disclosure provides a terminal positioning method, including: acquiring first positioning data of a target terminal corresponding to each reference base station from a reference signal sent by at least one reference base station, the first positioning data representing a positional relationship between the target terminal and the reference base station, the first positioning data including a cell identifier and navigation information, and the reference signal being sent by the reference base station via a communication satellite operating in a preset altitude range; and determining position information of the target terminal from the first positioning data and second positioning data of a preset reference terminal, the preset reference terminal being a terminal determined in advance with a fixed position, and the second positioning data representing a positional relationship between the preset reference terminal and the reference base station.

In a second aspect, the present disclosure further provides a terminal, including: at least one processor; and a storage device having stored therein at least one computer program which, when executed by the at least one processor, causes the at least one processor to implement the terminal positioning method described above.

In a third aspect, the present disclosure further provides a computer readable storage medium having stored therein a computer program which, when executed by a processor, causes the processor to implement the terminal positioning method described above.

### BRIEF DESCRIPTION OF DRAWINGS

FIG. 1 is a flowchart illustrating a terminal positioning method according to the present disclosure.
FIG. 2 is a flowchart illustrating an implementation of operation S1 in the terminal positioning method according to the present disclosure.
FIG. 3 is a schematic diagram of time-frequency structures of a Primary Synchronization Signal (PSS), a Secondary Synchronization Signal (SSS), and a Physical Broadcast Channel (PBCH) according to the present disclosure.
FIG. 4 is a flowchart illustrating an implementation of operation S11 in the terminal positioning method according to the present disclosure.
FIG. 5 is a flowchart illustrating an implementation of operation S113 in the terminal positioning method according to the present disclosure.
FIG. 6 is a flowchart illustrating synchronization of a reference signal according to the present disclosure.
FIG. 7 is a flowchart illustrating an implementation of operation S2 in the terminal positioning method according to the present disclosure.
FIG. 8 is a schematic diagram illustrating a positional relationship between reference base stations, a target terminal, and a preset reference terminal in two-dimensional position coordinates according to the present disclosure.
FIG. 9 is a schematic structural diagram of a terminal according to the present disclosure.

### DETAIL DESCRIPTION OF EMBODIMENTS

In order to enable those of ordinary skill in the art to better understand the technical solutions of the present disclosure, a terminal positioning method, a terminal, and a computer readable storage medium provided in the present disclosure are described in detail below with reference to the drawings.

Exemplary embodiments will be described more fully below with reference to the drawings, but the exemplary embodiments described herein may be embodied in different forms, and the present disclosure should not be interpreted as being limited to the embodiments described herein. The embodiments are provided to make the present disclosure more thorough and complete and enable those of ordinary skill in the art to fully understand the scope of the present disclosure.

The embodiments described herein and the features therein can be combined with one another if no conflict is incurred.

The term "and/or" used herein includes any combination and all combinations of at least one associated listed item.

The terms used herein are merely used to describe specific embodiments and/or implementations, and do not limit the present disclosure. As used herein, "a" and "the" which indicate a singular form also include a plural form, unless expressly stated in the context. It should be further understood that the term "include/comprise" and/or the term "be made of/consist of" used herein indicates the presence of a particular feature, integer, operation, element and/or component, but do not exclude the presence or addition of at least one another feature, integer, operation, element, component and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

According to some related technologies, the most effective way of acquiring position, time, and frequency information of terminals in broadband satellite networks is to use a Global Navigation Satellite Systems (GNSS) such as GPS, but since the system depends on support from another system, instability of the system is increased. Moreover, signals in satellite positioning technologies such as GPS and BeiDou are weak, GPS generally adopts pseudo code positioning technology, atomic clocks are built in GPS satellites for high-precision time synchronization between the satellites, then pseudo-ranges between multiple satellites and an antenna of a receiver are measured, and a system of equations is set up accordingly to calculate a position of the receiver. Since four parameters, i.e., X, Y, Z, and Δt, are to be calculated, at least four equations are to be set up, that is, a coverage from at least four satellites is desired for positioning. Furthermore, the antenna is desired to be unobstructed as possible, which causes the existing broadband satellite network technology being expected to be applied in areas with an open sky view. However, rain, snow, foliage, and buildings all have a significant impact on GPS signals, and thus there is a problem in applying the existing broadband satellite network technology in areas with forests, harsh weather conditions, and mountain obstructions. In addition, without cooperation of network technology such as an Assisted Global Positioning System (AGPS), a cold start time for GPS is very long, resulting in a long startup time of a GPS or BeiDou ground terminal (such as a GPS receiver and a BeiDou receiver), typically lasting for several minutes to ten or more minutes.

A scenario of applying the terminal positioning method provided in the present disclosure is described below.

In the terminal positioning method provided in the present disclosure, a reference base station sends a reference signal to a target terminal via a satellite operating in a preset altitude range, the satellite operating in the preset altitude range includes: a Low Earth Orbit (LEO) satellite in an altitude range of 500 km to 2000 km, a Medium Earth Orbit (MEO) satellite in an altitude range of 8000 km to 20000 km, and a Geostationary Earth Orbit (GEO) satellite in an altitude of about 35786 km. The LEO satellite has the advantages of low cost and small signal attenuation, and is a hotspot of a satellite broadband Internet of Things and an important research direction of 6G.

A Non-Terrestrial Network (NTN) (i.e., a space-ground integrated network) is currently a research hotspot in the industry, and a 5G NTN is a technology for a direct communication between a terminal and a satellite, is based on 5G New Radio technology and established by the 3rd Generation Partnership Project (3GPP) in R17. The NTN is a deterministic expectation for a 6G network, and the 3GPP will develop a standardization of 6G NTN space-ground integrated system in R21.

In some examples, the reference base station sends the reference signal to the target terminal via the LEO satellite. An environment of applying the NTN is different from that of a terrestrial 5G system. The LEO satellite has a relatively high velocity and a relatively large Doppler frequency shift, and thus desires real-time estimation and compensation. Depending on different orbits, a velocity range of the LEO satellite is from about 6.9 km/s to about 7.9 km/s, resulting in the relatively large Doppler frequency shift and a fast variation of Doppler frequency. As estimated based on a satellite velocity of about 7.9 km/s and a carrier frequency of about 2 GHz, the maximum Doppler frequency shift is about ±53 kHz, the maximum rate of change of Doppler frequency is about 530 Hz/s, the maximum spatial time delay variation rate is about 26.3µs/s, and for an Orthogonal Frequency Division Multiplexing (OFDM) subcarrier of 15 kHz, real-time frequency tracking and correction are desired to be performed, otherwise, a demodulation on a signal may fail. Since a three-dimensional search for frequency, phase, and Physical Cell Identifier (PCI) is desired for a real-time compensation, but a 5G Single Side Band (SSB) period is as long as 20ms, a 5G time-frequency synchronization algorithm in the related technology, such as frame header synchronization method based on sliding correlation, involves excessive computational complexity and thus is inapplicable. In view of the above, time-frequency compensation may be performed in advance on the reference signal from the LEO satellite by acquiring prior information such as time, frame header, and frequency.

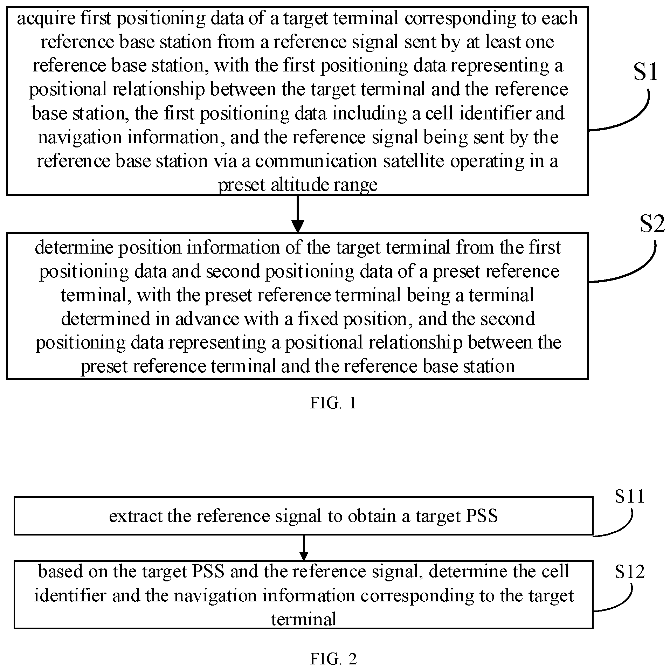

FIG. 1 is a flowchart illustrating a terminal positioning method according to the present disclosure. In a first aspect, referring to FIG. 1, the present disclosure provides a terminal positioning method applicable to a target terminal, including following operations S1 and S2.

At S1, acquiring first positioning data of a target terminal corresponding to each reference base station from a reference signal sent by at least one reference base station, with the first positioning data representing a positional relationship between the target terminal and the reference base station, the first positioning data including a cell identifier and navigation information, and the reference signal being sent by the reference base station via a communication satellite operating in a preset altitude range.

At S2, determining position information of the target terminal from the first positioning data and second positioning data of a preset reference terminal, with the preset reference terminal being a terminal determined in advance with a fixed position, and the second positioning data representing a positional relationship between the preset reference terminal and the reference base station.

In the terminal positioning method provided in the present disclosure, the position information of the target terminal is determined from the first positioning data of the target terminal corresponding to at least one reference base station and the second positioning data of the preset reference terminal corresponding to the at least one reference base station, the preset reference terminal with the fixed position is introduced, and an influence caused by asynchronization of reference base stations on determining the position information of the target terminal is eliminated, so that the position information of the target terminal is accurate, and integration of positioning, navigation, and communication of an NTN system is realized.

In some implementations, each reference base station, the target terminal, and the preset reference terminal are within a communication coverage of the communication satellite operating in the preset altitude range.

The reference base station is not particularly limited in the present disclosure, and may be a ground station, a gateway station, or the like within the coverage of the communication satellite.

In some implementations, first positioning data corresponding to at least three reference base stations is desired for achieving two-dimensional positioning of the target terminal; first positioning data corresponding to at least four reference base stations are desired for achieving three-dimensional positioning of the target terminal; and first positioning data corresponding to at least one reference base station is desired for positioning of determining whether the target terminal is in place. The number of reference base stations is not particularly limited in the present disclosure, and may be determined based on expectations on positioning the target terminal.

In some implementations, the communication satellite operating in the preset altitude range is an LEO satellite in an altitude range of 500 km to 2000 km.

In some implementations, the preset reference terminal is the terminal determined in advance with the fixed position, and "with the fixed position" refers to that a relative position of the preset reference terminal relative to the reference base station is fixed.

The target terminal is not particularly limited in the present disclosure, and may be a terminal device capable of being configured to receive the reference signal, such as a Customer Premises Equipment (CPE), a vehicle-mounted modulator-demodulator (modem), an airborne modem, or a shipborne modem.

FIG. 2 is a flowchart illustrating an implementation of operation S1 in the terminal positioning method according to the present disclosure. Referring to FIG. 2, in some implementations, operation S1 includes following operations S11 and S12.

At S11, extracting the reference signal to obtain a target PSS.

At S12, based on the target PSS and the reference signal, determining the cell identifier and the navigation information corresponding to the target terminal.

In the terminal positioning method provided in the present disclosure, the first positioning data includes: the cell identifier (i.e., a cell ID) and the navigation information. In some implementations, the navigation information is information related to the reference base station, and the information related to the reference base station includes: at least one of ephemeris information of the communication satellite or system information of the reference base station. The system information may be Master Information Block (mib), System Information Block (sib), and the like. It should be noted that the navigation information may be used for determining information such as position and velocity of the communication satellite operating in the preset altitude range.

The reference base station sends the reference signal to the target terminal via the communication satellite operating in the preset altitude range, the reference signal received by the target terminal from the communication satellite is a downlink signal, and the target PSS is extracted from the reference signal.

A description of PSS is given below.

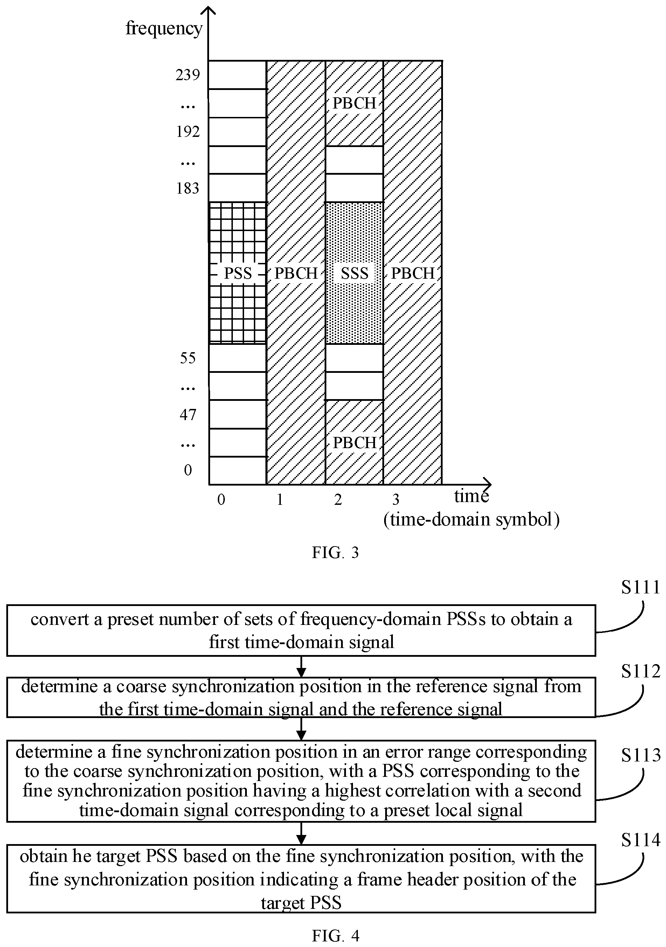

Referring to FIG. 3, a PCI is consist of a PSS and an SSS; and there are 1008 PCIs in total, which means that there are 1008 different sequence combinations of the PSS and the SSS in total. The PSS is located on middle 127 subcarriers (with frequencies of 56 to 182) of symbol 0, and a sequence index of the PSS takes one of three values: 0, 1, and 2; the SSS is located on middle 127 subcarriers (with frequencies of 56 to 182) of symbol 2, and a sequence index of the SSS takes one of 336 values, i.e., 0 to 355. Different guard subcarriers Set 0 {48 to 55, 183 to 191} are respectively arranged at two ends of each of the PSS and the SSS, Set 0 represents the guard subcarriers, and {48 to 55, 183 to 191} represents frequencies of the guard subcarriers. A PBCH is located on symbol 1, symbol 3, and symbol 2, occupies all subcarriers from 0 to 239 of symbols 1 and 3, and occupies all subcarriers of symbol 2 except for the subcarriers occupied by the SSS and the guard subcarriers Set 0 for the SSS.

The PSS and the SSS are used for determining the cell identifier, the PSS has three sequences and is used for transmitting NID₂ in a cell physical layer ID, and NID₂ takes one of three values: 0, 1 and 2. The SSS has 336 sequences for transmitting NID₁ in the cell ID, and a value range of NID₁ is 0 to 335. The cell identifier is determined by the formula cell ID = 3 × NID₁ + NID₂. Thus, there are 1008 cell identifiers in total, and a value range of the cell identifiers is 0 to 1007.

As can be seen from the above description of the PSS, in a case where the target PSS is determined, a corresponding SSS and a corresponding PBCH can be determined, and the cell identifier can be thus determined.

Accordingly, FIG. 4 is a flowchart illustrating an implementation of operation S11 in the terminal positioning method according to the present disclosure. Referring to FIG. 4, in some implementations, operation S11 includes: operations S111 to S114.

At S111, converting a preset number of sets of frequency-domain PSSs to obtain a first time-domain signal.

At S112, determining a coarse synchronization position in the reference signal from the first time-domain signal and the reference signal.

At S113, determining a fine synchronization position in an error range corresponding to the coarse synchronization position, with a PSS corresponding to the fine synchronization position having a highest correlation with a second time-domain signal corresponding to a preset local signal.

At S114, obtaining the target PSS based on the fine synchronization position, with the fine synchronization position indicating a frame header position of the target PSS.

The preset number of the sets of frequency-domain PSSs is not particularly limited in the present disclosure, and may be determined based on actual situations. In some implementations, the preset number of the sets of frequency-domain PSSs is 3, so as to reduce computational complexity of correlation processing between the first time-domain signal and the reference signal by a factor of three.

In some implementations, converting the frequency-domain PSSs is performing an Inverse Fast Fourier Transform (IFFT) process on the frequency-domain PSSs to obtain the first time-domain signal.

In some implementations, before determining the coarse synchronization position in the reference signal (i.e., operation S112), the terminal positioning method may further include: performing a filtering process on the reference signal. Specifically, the filtering process may be a low-pass filtering process, so as to eliminate noise interference and reduce difficulty of subsequent processing.

In the terminal positioning method provided in the present disclosure, the reference signal received by the target terminal comes from at least one reference base station; due to different frequency differences between reference signals from different reference base stations caused by the Doppler frequency shift, the coarse synchronization position in the reference signal is determined first, and then the fine synchronization position is determined, so as to improve the accuracy of the position information of the target terminal. In a case where the fine synchronization position, which indicates the frame header position of the target PSS, is determined, a frame synchronization process is performed on the fine synchronization position to determine the frame header position of the target PSS, thereby obtaining the target PSS.

In some implementations, operation S112 includes: performing correlation processing on first sequences corresponding to the first time-domain signal and second sequences corresponding to the reference signal to obtain a first correlation magnitude corresponding to each point in the second sequences; and comparing first correlation magnitudes with a preset threshold to determine the coarse synchronization position.

In the terminal positioning method provided in the present disclosure, the first time-domain signal is divided into a first number of groups, and the reference signal is divided into a second number of groups. In some examples, the first number is equal to the second number. A first number of groups/sets of first sequences are obtained by dividing the first time-domain signal, and a second number of groups/sets of second sequences are obtained by dividing the reference signal. In some examples, before being divided, at least one of the first time-domain signal or the reference signal may be subjected to a sampling process.

In an example, the first time-domain signal is obtained by converting three sets of frequency-domain PSSs, and the first time-domain signal includes two sets of first sequences, i.e., three sets of frequency-domain PSS signals are generated locally, and are mapped to subcarriers 56 to 182 of an SSB frequency domain based on 3GPP 38-series specifications, the remaining subcarriers carry no other information, zero padding is performed to form guard intervals, the zero-padded frequency-domain PSSs are subjected to a 4096-point IFFT to be transformed into the time domain, and are subjected to 16× downsampling, three downsampled sequences are superimposed to form a new sequence (i.e., the first time-domain signal), and the new sequence is divided into two segments, i.e., 1P and 2P, which are the first sequences.

16× downsampling is performed on the reference signal 20ms Data, and the downsampled reference signal is divided into two segments, i.e., Data1 and Data2, which are the second sequences.

In addition, the correlation processing is not particularly limited in the present disclosure, and may be sliding correlation processing. Sliding correlation is a signal processing technique for measuring similarity between two signals with different time offsets.

In an example, the first sequences include 1P and 2P, and the second sequences include Data1 and Data2. Starting from a first sampling point of Data1, sliding is performed with a sliding window of N/2. For sliding each sampling point (with a sliding step being one sampling point), conjugate multiplication is performed between 1P and a corresponding segment of Data1 with a length of N/2, a summation is performed by repeatedly adding to obtain the first correlation magnitude corresponding to each sampling point in Data1. Similarly, starting from a first sampling point of Data2, sliding is performed with a sliding band length being equal to a sequence length of Data1 minus a sequence length of 1P, and for each time sliding, the first correlation magnitude corresponding to each sampling point of Data2 is obtained.

In the terminal positioning method provided in the present disclosure, a method for comparing the first correlation magnitudes with the preset threshold is not limited. The first correlation magnitudes may be directly and sequentially compared with the preset threshold; or the first correlation magnitude corresponding to each segment may be processed into a correlation peak curve, and the preset threshold is used as a decision threshold to be compared with the correlation peak curve. In some implementations, each first sequence and the first correlation magnitude of the second sequence corresponding thereto are added to obtain a correlation peak curve, the correlation peak curve is normalized, the normalized curve is compared with the preset threshold, and a sampling point index (i.e., the coarse synchronization position) having a peak greater than the preset threshold is determined.

In an example, in a case where a detected peak of a starting point of a position of PSS in the normalized correlation peak curve is close to 1, the decision threshold (i.e., the preset threshold) is set to 0.9, and the sampling point index n_{coarse} greater than the decision threshold in the correlation peak curve is determined.

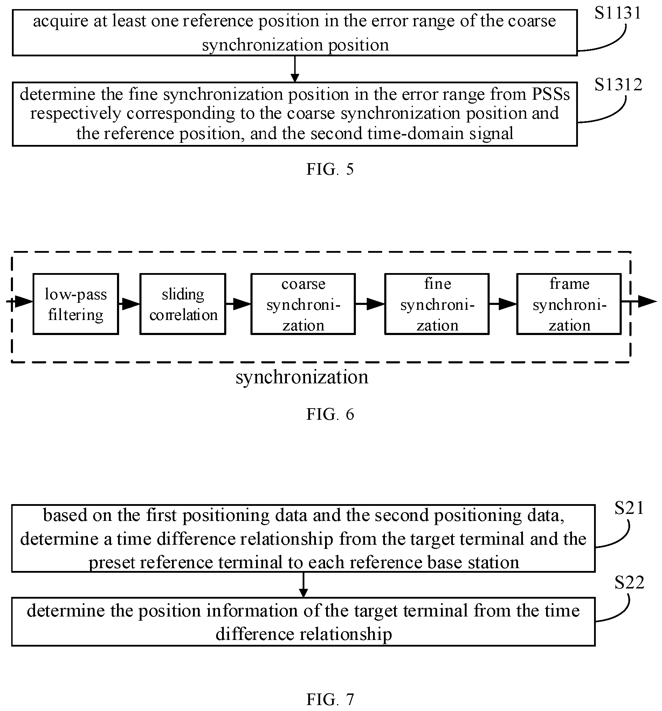

FIG. 5 is a flowchart illustrating an implementation of operation S113 in the terminal positioning method according to the present disclosure. Referring to FIG. 5, in some implementations, operation S113 includes: operations S1131 and S1132.

At S1131, acquiring at least one reference position in the error range of the coarse synchronization position.

At S1132, determining the fine synchronization position in the error range from PSSs respectively corresponding to the coarse synchronization position and the reference position, and the second time-domain signal.

Accordingly, in some implementations, operation S1132 includes: respectively performing correlation processing on a third sequence of the second time-domain signal and fourth sequences of the PSSs respectively corresponding to the coarse synchronization position and the reference position, to obtain at least two second correlation magnitudes; comparing the at least two second correlation magnitudes to obtain a target second correlation magnitude, with the target second correlation magnitude being a maximum of the at least two second correlation magnitudes; and determining a position corresponding to the target second correlation magnitude as the fine synchronization position.

In the implementations, the error range of the coarse synchronization position is related to a step size of the sliding window in the correlation processing between the second sequences of the reference signal and the first sequences of the first time-domain signal. In some implementations, the step size of the sliding window in the sliding correlation processing between the second sequences of the reference signal and the first sequences of the first time-domain signal is 16Ts, that is, 16× downsampling processing is performed on the second sequences of the reference signal, and in this case, the searched coarse synchronization position may have an error in an error range from -16Ts to 16Ts.

Since the error range of the coarse synchronization position has a relatively large impact on searching for the SSS, searching for the reference position is to be performed for reducing an error in determining the coarse synchronization position. The number of reference positions in the error range of the coarse synchronization position may be determined based on a desired error range of the final fine synchronization position.

In some implementations, with the coarse synchronization position n_{coarse} being taken as a center, offset is respectively performed to two sides thereof by -15 to 15, with 15 being obtained by subtracting 1 from the downsampling factor 16, and normalized sliding correlation is respectively performed on the fourth sequences of at least two PSSs respectively corresponding to a sampling point (i.e. the reference position) obtained by each offset and the original coarse synchronization position, and the third sequence of the second time-domain signal, to obtain at least two second correlation magnitudes; and the at least two second correlation magnitudes are compared, the maximum of the at least two second correlation magnitudes is determined as the target second correlation magnitude, and the position corresponding to the target second correlation magnitude is determined as the fine synchronization position n_{exact}, thereby reducing an error of the final fine synchronization position to -1Ts to 1Ts.

In some implementations, before operation S113, the terminal positioning method further includes: performing a frequency search on the reference signal through the preset local signal, to determine a frequency offset value; compensating for a first PSS corresponding to the coarse synchronization position based on the frequency offset value, to obtain an updated first PSS; and updating the coarse synchronization position based on the updated first PSS.

In the implementations, due to a fact that the broadband satellite networks adopt OFDM technology, are sensitive to a frequency offset, and expect to track a communication satellite beam (for example, a visible time of an LEO satellite is about 10 min, and a residence time of the target terminal in one beam may be merely 1 min), the target terminal is to determine the coarse synchronization position first, and then perform tracking and a Doppler frequency shift compensation.

In addition, before performing the frequency search on the reference signal through the preset local signal and determining the frequency offset value, the terminal positioning method further includes: converting the preset local signal to obtain the second time-domain signal.

In some implementations, converting the preset local signal may include: mapping the preset local signal to subcarriers 56 to 182 in the SSB frequency domain based on the 3GPP 38-series specifications, padding other subcarriers with zero to form guard intervals, performing a 4096-point IFFT on the zero-padded frequency-domain PSS to transform the zero-padded frequency-domain PSS into the time domain, and processing with a Numerically Controlled Oscillator (NCO) to generate the second time-domain signal which identifies a frequency offset signal.

The frequency search is not particularly limited in the present disclosure, and may be a linear search.

In some implementations, the reference signal is searched with a certain search step until at least one of following situations occurs: a target frequency offset value is obtained from the search or all elements are searched, with the elements being sampling points in the reference signal which correspond to the coarse synchronization position. In some examples, the search step is 7.5 kHz, and the search is performed by using a linear search acquisition algorithm, which searches frequency bands on both sides alternately and gradually.

In some implementations, determining the frequency offset value includes: matching a frequency point of a frequency offset signal corresponding to an element with the element by, for example, performing sliding correlation between the element and the frequency point of the frequency signal corresponding to the element to obtain a target correlation magnitude, and determining the frequency offset value (i.e., an integer Doppler frequency offset) from the target correlation magnitude. The target magnitude may be the correlation magnitude with a maximum value; or based on a comparison between correlation results of the sliding correlation and a preset frequency offset threshold, the correlation result greater than the preset frequency offset threshold is determined as the target correlation magnitude, but the present disclosure is not limited thereto.

A compensation for the first PSS corresponding to the coarse synchronization position is performed based on the frequency offset value to obtain the updated first PSS, and the coarse synchronization position is updated based on the updated first PSS. By compensating for the first PSS corresponding to the coarse synchronization position, the accuracy of the coarse synchronization position can be improved, and thus the fine synchronization position more accurate can be obtained.

In an example, the target terminal receives reference signals sent by all communication satellites in the air through a receiving link, and performs coarse synchronization on the reference signals by: normalized sliding correlation, merging first correlation magnitudes, calculating the coarse synchronization position, and cell ID matching. In particular, sliding correlation is performed on local PSS sequences transformed into the time domain and reference data, a coarse synchronization position is determined with a normalization correlation method, and a cell ID is preliminarily identified based on the coarse synchronization position. Further, the coarse synchronization position is updated (with a frequency offset compensation) by a frequency search, and for an LEO satellite at an altitude of 1500 km, considering that the communication satellite is visible at an elevation angle of 15°, a desired supportable distance is 1500*3.86=5790 km, so that a data length to be searched is set to 20 ms (corresponding to a distance of 6000 km), that is, an SSB period is set to 20 ms. As can be seen from the characteristics of the PSS, for three preset local signals, i.e., preset local PSSs, time-domain sampling points of 20 ms + 1 ms are to be searched.

For a carrier frequency estimation at 14 GHz, the maximum Doppler frequency offset is ±371 kHz, and the maximum rate of change is 3710 Hz/s; and for a carrier frequency estimation at 2 GHz, the maximum Doppler frequency offset is ±53 kHz, and the maximum rate of change is 530 Hz/s.

Taking 2GHz as an example, a frequency to be searched is ±53 kHz, and a Resource Element (RE) for 2GHz is 15 kHz, [-4 -3 -2 -1 0 1 2 3 4]*15 kHz are desired for corresponding to 9 Doppler frequencies. There are three PSS sequences for different cell IDs; during the frequency search for the coarse synchronization position, three preset local PSS sequences are respectively subjected to normalized correlation with the reference signal; and an updated coarse synchronization position is determined by comparing correlation magnitudes, and the cell ID can be identified based on the updated coarse synchronization position.

Further, local PSS sequences are generated based on the cell ID, the three local PSS sequences are respectively mapped onto corresponding REs, other REs are padded with zero, then the three local PSS sequences are transformed into the time domain and added with Cyclic Prefixes (CPs) to generate local primary synchronization sequences P₀, P₁, and P₂ of the cell ID corresponding to the coarse synchronization position.

In some implementations, operation S12 includes: determining the target SSS corresponding to the target PSS from the target PSS; calculating based on the target PSS and the target SSS to obtain the cell identifier corresponding to the target terminal; demodulating the reference signal to obtain the navigation information, which includes at least one of the ephemeris information of the communication satellite or the system information of the reference base station.

In the implementations, NID₁ in the cell ID may be determined from the target PSS. The SSS is located on the middle 127 subcarriers (56 to 182) of symbol 2, different guard subcarriers {48 to 55, 183 to 191} Set 0 are respectively arranged at two ends of each of the target PSS and the corresponding SSS, and the guard subcarriers have 336 values in total.

A time-domain SSS is extracted from the reference signal based on the target PSS, a Fast Fourier Transform (FFT) is performed on the extracted time-domain SSS to transform the time-domain SSS into the frequency domain, the SSS with 127 bits in frequency domain is extracted, and cross-correlation processing between each of 336 preset local frequency-domain SSS sequences and the frequency-domain SSS extracted from the received signal is respectively performed to obtain correlation results. The SSS corresponding to a target correlation result corresponding to the maximum value of the 336 correlation results is the target SSS, and NID₁ in the cell ID is then determined.

The cell ID is obtained based on the target PSS and the corresponding target SSS, the target PSS provides NID₂ in the cell ID, and the corresponding SSS provides NID₁ in the cell ID.

Further, the PBCH corresponding to the target PSS is demodulated to obtain the navigation information of the reference base station.

In some implementations, the accuracy of time synchronization of the reference base station may be reduced to below 1.5 µs, and the accuracy of the fine synchronization position may reach about 300 m, which can meet preliminary positioning expectations.

In an example, referring to FIG. 6, a synchronization process performed by the target terminal on the received reference signal includes: performing a low-pass filtering process on the reference signal to obtain the reference signal without noise or clutter; converting the preset number of sets of frequency-domain PSSs to obtain the first time-domain signal; performing sliding correlation processing between the first sequences corresponding to the first time-domain signal and the second sequences corresponding to the reference signal to obtain the first correlation magnitude corresponding to each point in the second sequences, to determine the coarse synchronization position; based on the coarse synchronization position, determining the fine synchronization position in the error range corresponding to the coarse synchronization position, so as to reduce an error caused by the sliding step in the sliding correlation processing between the first sequences corresponding to the first time-domain signal and the second sequences corresponding to the reference signal; and extracting the time-domain SSS from the reference signal based on the target PSS, performing a frame synchronization process on the SSS, determining NID₁ corresponding to the SSS, and determining the cell identifier by the formula cell ID = 3 × NID₁ + NID₂, with NID₂ in the cell ID being provided by the target PSS.

FIG. 7 is a flowchart illustrating an implementation of operation S2 in the terminal positioning method according to the present disclosure. Referring to FIG. 7, in some implementations, operation S2 includes: operations S21 and S22.

At S21, based on the first positioning data and the second positioning data, determining a time difference relationship from the target terminal and the preset reference terminal to each reference base station.

At S22, determining the position information of the target terminal from the time difference relationship.

In the implementations, the first positioning data and the second positioning data each include the cell identifier and the navigation information, the cell identifier may be used for calculating the position of the target terminal, the navigation information may include the ephemeris information and the system information, and a position and a velocity of the communication satellite may be determined from the ephemeris information. The ephemeris information of the communication satellite includes an orbit parameter table of the communication satellite, and the orbit parameter table indicates, through list data, a predetermined location of a certain celestial body at regular time intervals or a predetermined location of a certain artificial satellite at regular time intervals.

In some examples, a process of calculating the position of the target terminal is as follows.

Position coordinates of the target terminal UE to be estimated are (x, y, z), and known position coordinates of an i^{th} reference base station i are (xᵢ, yᵢ, zᵢ), then a first distance rᵢ between the target terminal UE and the i^{th} reference base station satisfies the formula (1): ${{r}_{i}}^{2} = {\left({x}_{i}-x\right)}^{2} + {\left({y}_{i}-y\right)}^{2} + {\left({z}_{i}-z\right)}^{2} = {K}_{i} - 2 {xx}_{i} - 2 {yy}_{i} - 2 {zz}_{i} + {x}^{2} + {y}^{2} + {z}^{2}$ where i = 1...m, ${K}_{i} = {{x}_{i}}^{2} + {{y}_{i}}^{2} + {z}_{i}^{2}$, and c denotes an electromagnetic wave propagation velocity.

A difference between the first distance from the i^{th} reference base station to the target terminal UE and a second distance from the 1^{st} reference base station to the target terminal UE is: r_{i,1} = rᵢ - r₁.

The difference r_{i,1} = rᵢ - r₁ is substituted into the formula (1) to obtain the formula (2): ${{r}_{i , 1}}^{2} + 2 {r}_{i , 1} {r}_{1} + {r}_{1}^{2} = {K}_{i} - 2 {xx}_{i} - 2 {yy}_{i} - {2 zz}_{i} + {x}^{2} + {y}^{2} + {z}^{2}$

Moreover, the formula (3) for the second distance between the 1^{st} reference base station and the target terminal UE is obtained as follows: ${{r}_{1}}^{2} = {K}_{1} - 2 {xx}_{1} - 2 {yy}_{1} - {2 zz}_{1} + {x}^{2} + {y}^{2} + {z}^{2}$

Based on the formula (3), r₁² and x² + y² + z² are eliminated from the formula (2) to obtain the formula (4): ${{r}_{i , 1}}^{2} + 2 {r}_{i , 1} {r}_{1} = - 2 {xx}_{i , 1} - 2 {yy}_{i , 1} - {2 zz}_{i , 1} + {K}_{i} - {K}_{1} , i = 2 … m$ where x_{i,1} = xᵢ - x₁, y_{i,1} = yᵢ - y₁, and z_{i,1} = zᵢ - z₁.

Then, a linear equation of the first distance and the second distance, i.e., the formula (5), is obtained: $\left[{x}_{i , 1} {y}_{i , 1} {z}_{i , 1} {r}_{i , 1}\right] * {\left[x y z {r}_{1}\right]}^{T} = - \frac{1}{2} \left({{r}_{j , 1}}^{2}-{K}_{i}+{K}_{1}\right)$ where x, y, z, r₁ are four unknowns.

Thus, in a case where the total number of reference base stations is 4, r₁ may be obtained by a measurement with a Time of Arrival (TOA) method, and then the formula (5) of a linear equation set is directly solved; in a case where the total number of reference base stations is 5 and synchronization of the base stations is achieved, the linear equation set may be directly solved; and in a case where the total number of reference base stations is greater than 5, the linear equation set may be solved with a Least Square (LS) method.

Further, a high-accuracy positioning calibration is performed on the target terminal based on the second positioning data of the preset reference terminal, the position of the preset reference terminal is fixed and is not moved, the preset reference terminal serving as a common terminal UE receives the reference signals from the reference base stations, and then an influence caused by asynchrony of the reference base stations is eliminated through the preset reference terminal.

In some examples, a process of performing the high-accuracy positioning calibration on the target terminal based on the second positioning data of the preset reference terminal is described by taking two-dimensional position coordinates as an example.

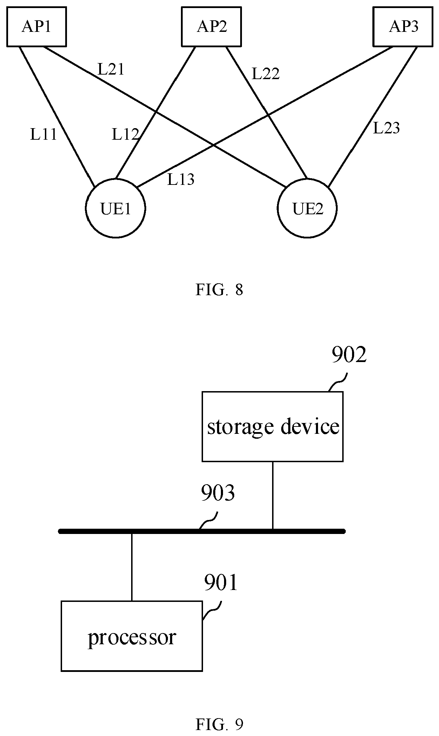

Referring to FIG. 8, AP1 is a first reference base station, AP2 is a second reference base station, AP3 is a third reference base station, UE1 is the target terminal, UE2 is the preset reference terminal, the positions of AP1, AP2, AP3, and UE2 are all known, and UE1 accesses AP1.

A time consumed by UE1 receiving a signal from AP1 is t₁ = δ_{1,1} + L_{1,1} / v; a time consumed by UE1 receiving a signal from AP2 is t₂ = δ_{1,2} + L_{1,2} / v; a time consumed by UE2 receiving a signal from AP1 is T₁ = δ_{2,1} + L_{2,1} / v; a time consumed by UE2 receiving a signal from AP2 is T₂ = δ_{2,2} + L_{2,2} / v; δ_{i,j} denotes a synchronization time error between UEᵢ and APⱼ, and L_{i,j} denotes a true distance between UEᵢ and APⱼ.

The formula (6) is derived from two-dimensional Time Difference Of Arrival (TDOA): $\left[\begin{matrix}{x}_{2 , 1} & {y}_{2 , 1} & {r}_{2} - {r}_{1} \\ {x}_{3 , 1} & {y}_{3 , 1} & {r}_{3} - {r}_{1} \\ {x}_{4 , 1} & {y}_{4 , 1} & {r}_{4} - {r}_{1}\end{matrix}\right] ∗ \left[\begin{matrix}x \\ y \\ {r}_{1}\end{matrix}\right] = - \frac{1}{2} \left[\begin{matrix}{\left({r}_{2}-{r}_{1}\right)}^{2} - {K}_{2} + {K}_{1} \\ {\left({r}_{3}-{r}_{1}\right)}^{2} - {K}_{3} + {K}_{1} \\ {\left({r}_{4}-{r}_{1}\right)}^{2} - {K}_{3} + {K}_{1}\end{matrix}\right]$

In the formula (6), x_{i,1}, y_{i,1}, and Kᵢ are values related to the coordinates of the reference base station APⱼ, r₁ is an unknown, and rᵢ - r₁ as a variable is estimated by using reception times.

Here, taking r₂ - r₁ as an example, for TDOA in the related technology, then r₂ - r₁ = v*(t₂ - t₁) + v*(δ_{1,2} - δ_{1,1}).

In a case where synchronization of AP1 and AP2 is not ensured, accurate r₂ - r₁ cannot be obtained by a estimation using a conventional TDOA method which measures the reception time of the reference base station AP1 and that of the reference base station AP2.

In view of the above, the preset reference terminal UE2 is used for calculation.

A signal time difference between respective arrivals of the reference signal from AP1 to the target terminal UE1 and the preset reference terminal UE2 is calculated by the formula (7): ${Td}_{1} = {T}_{1} - {t}_{1} = \frac{\left({L}_{2 , 1}-{L}_{1 , 1}\right)}{v} + {δ}_{2 , 1} - {δ}_{1 , 1}$

A signal time difference between respective arrivals of the reference signal from AP2 to the target terminal UE1 and the preset reference terminal UE2 is calculated by the formula (8): ${Td}_{2} = {T}_{2} - {t}_{2} = \frac{\left({L}_{2 , 2}-{L}_{1 , 2}\right)}{v} + {δ}_{2 , 2} - {δ}_{1 , 2}$

Thus, a time difference relationship from the target terminal and the preset reference terminal to the 1^{st} reference base station and the 2^{nd} reference base station is calculated by the formula (9): ${Td}_{2} - {Td}_{1} = \frac{\left({L}_{2 , 2}-{L}_{2 , 1}-{L}_{1 , 2}-{L}_{1 , 1}\right)}{v} + \left[\left({δ}_{1 , 1}-{δ}_{1 , 2}\right)-\left({δ}_{2 , 1}-{δ}_{2 , 2}\right)\right]$

δ_{1,1} - δ_{1,2} is a synchronization time error between AP1 and AP2, δ_{2,1} - δ_{2,2} is the synchronization time error between AP1 and AP2, that is, (δ_{1,1} - δ_{1,2}) - (δ_{2,1} - δ_{2,2}) = 0, thereby eliminating the synchronization error between AP1 and AP2; and L_{2,1} and L_{2,2} are known numbers. Then, a difference between the first distance from the 2^{nd} reference base station to the target terminal UE and the second distance from the 1^{st} reference base station to the target terminal UE is obtained as: ${r}_{2} - {r}_{1} = {L}_{1 , 2} - {L}_{1 , 1} = v * \left({Td}_{1}-{Td}_{2}\right) + {L}_{2 , 2} - {L}_{2 , 1} .$

Thus, through measuring the respective reception times t₁, t₂, T₁, and T₂ of the reference signals from the reference base stations AP, without requiring strict synchronization of the target UE and the reference base stations AP and time synchronization of the reference base stations AP, TDOA formulas are used to improve the accuracy of positioning.

In some examples, a process of performing the high-accuracy positioning calibration on the target terminal based on the second positioning data of the preset reference terminal is described by taking three-dimensional position coordinates as an example.

There are 5 reference base stations AP with position coordinates of APⱼ(Xⱼ, Yⱼ, Zⱼ), where j ∈ {1,2,3,4,5}; there is one preset reference terminal UE2 with position coordinates of UE₂ (x₂, y₂, z₂); and the position coordinates of the target terminal are UE₁ (x, y, z).

Based on Observed Time Difference of Arrival (OTDOA), a time difference Tdⱼ between a reception time of UE1 receiving the reference signal and a reception time of UE2 receiving the reference signal is calculated by the formula (10): ${Td}_{j} = \left(T+{T}_{j}+\frac{{L}_{1 j}}{v}\right) - \left(t+{t}_{j}+\frac{{L}_{1 j}}{v}\right)$

Since T₂-T₁ and t₂-t₁ are phase differences between AP2 and AP1 and are equal to a same value, a time difference formula (11) is obtained as follows: ${Td}_{j} - {Td}_{1} = \frac{\left({L}_{2 j}-{L}_{1 j}-{L}_{21}+{L}_{11}\right)}{v} , j \neq 1 ,$

Tdⱼ denotes a time difference between arrivals of a reference signal from a j^{th} reference base station APⱼ to the preset reference terminal UE2 and to the target terminal UE1, and may be obtained through observing; and Lᵢⱼ denotes a distance between UEᵢ and APⱼ, where i ∈ {1,2} and j ∈ {1,2,3,4,5}.

Both Tdⱼ and L₂ⱼ may be obtained by a calculation based on known parameters, so that the unknown in the formula (11) is L₁ⱼ, and the formula (12) is obtained based on a geometrical relationship of spatial coordinates: ${L}_{1 j} = \sqrt{{\left(x-{X}_{j}\right)}^{2} + {\left(y-{Y}_{j}\right)}^{2} + {\left(z-{Z}_{j}\right)}^{2}}$

A time difference formula is obtained: $\left\{\begin{matrix}\sqrt{{\left(x-{X}_{1}\right)}^{2} + {\left(y-{Y}_{1}\right)}^{2} + {\left(z-{Z}_{1}\right)}^{2}} - \sqrt{{\left(x-{X}_{2}\right)}^{2} + {\left(y-{Y}_{2}\right)}^{2} + {\left(z-{Z}_{2}\right)}^{2}} = v \left({Td}_{2}-{Td}_{1}\right) + {L}_{21} - {L}_{22} \\ \sqrt{{\left(x-{X}_{1}\right)}^{2} + {\left(y-{Y}_{1}\right)}^{2} + {\left(z-{Z}_{1}\right)}^{2}} - \sqrt{{\left(x-{X}_{3}\right)}^{2} + {\left(y-{Y}_{3}\right)}^{2} + {\left(z-{Z}_{3}\right)}^{2}} = v \left({Td}_{3}-{Td}_{1}\right) + {L}_{21} - {L}_{23} \\ \sqrt{{\left(x-{X}_{1}\right)}^{2} + {\left(y-{Y}_{1}\right)}^{2} + {\left(z-{Z}_{1}\right)}^{2}} - \sqrt{{\left(x-{X}_{4}\right)}^{2} + {\left(y-{Y}_{4}\right)}^{2} + {\left(z-{Z}_{4}\right)}^{2}} = v \left({Td}_{4}-{Td}_{1}\right) + {L}_{21} - {L}_{24} \\ \sqrt{{\left(x-{X}_{1}\right)}^{2} + {\left(y-{Y}_{1}\right)}^{2} + {\left(z-{Z}_{1}\right)}^{2}} - \sqrt{{\left(x-{X}_{5}\right)}^{2} + {\left(y-{Y}_{5}\right)}^{2} + {\left(z-{Z}_{5}\right)}^{2}} = v \left({Td}_{5}-{Td}_{1}\right) + {L}_{21} - {L}_{25}\end{matrix}\right. .$

The set of nonlinear equations is converted into a set of linear equations as the formula (13): $2 \left[{x}_{j , 1} {y}_{j , 1} {z}_{j , 1} {r}_{j , 1}\right] * {\left[x y z {r}_{1}\right]}^{T} = {K}_{j} - {K}_{1} - {{r}_{j , 1}}^{2}$

The formula (13) is solved to obtain a unique solution (x,y,z) : ${\left[x y z {r}_{1}\right]}^{T} = \frac{1}{2} {\left[{x}_{j , 1} {y}_{j , 1} {z}_{j , 1} {r}_{j , 1}\right]}^{- 1} * \left({K}_{j}-{K}_{1}-{{r}_{j , 1}}^{2}\right) .$
${r}_{j , 1} = - \left(v\left({Td}_{j}-{Td}_{1}\right)+{L}_{21}-{L}_{2 j}\right)$ is obtained by a calculation based on observed data.

The high-accuracy positioning of the target terminal can be achieved through the preset reference terminal. In some implementations, a positioning error can be reduced from 450 m to a level of decimeters. Moreover, the problems that different frequency differences exist between reference signals from the reference base stations through different communication satellites due to the Doppler frequency shift and a plurality of receiving circuits are desired for a plurality of communication satellites are solved, and the cost of the receiving circuit at the side of the target terminal is reduced.

In the terminal positioning method provided in the present disclosure, by determining the position information of the target terminal from the first positioning data of the target terminal corresponding to the at least one reference base station and the second positioning data of the preset reference terminal corresponding to the at least one reference base station, the accurate of the position information of the target terminal is improved, and the integration of positioning, navigation, and communication of the NTN system is realized.

In a second aspect, referring to FIG. 9, the present disclosure provides a terminal, including: at least one processor 901; and a storage device 902 having stored therein at least one computer program which, when executed by the at least one processor 901, causes the at least one processor 901 to implement the terminal positioning method described above.

In some implementations, the terminal further includes at least one input/output (I/O) interface 903 connected between the processor 901 and the storage device 902 and configured to enable information interaction between the processor 901 and the storage device 902.

The processor 901 is a device having a data processing capability, and includes, but is not limited to, a Central Processing Unit (CPU); the storage device 902 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 903 is connected between the processor 901 and the storage device 902, is capable of enabling the information interaction between the processor 901 and the storage device 902, and includes, but is not limited to, a data bus (Bus).

In a third aspect, the present disclosure provides a computer readable storage medium having stored therein a computer program which, when executed by a processor, causes the processor to implement the terminal positioning method described above.

It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor (such as a CPU, a digital signal processor or a microprocessor), or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/non-volatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary implementations by using specific terms, but the terms are merely used and should be merely interpreted as having general illustrative meanings, rather than for the purpose of limitation. Unless expressly stated otherwise, it is apparent to those of ordinary skill in the art that the features, characteristics and/or elements described in connection with a particular implementation can be used alone or in combination with the features, characteristics and/or elements described in connection with other implementations. Therefore, it should be understood by those of ordinary skill in the art that various changes in forms and details can be made without departing from the scope of the present disclosure as defined by the appended claims.

## Claims

1. A terminal positioning method, comprising:
acquiring first positioning data of a target terminal corresponding to each reference base station from a reference signal sent by at least one reference base station, wherein the first positioning data represents a positional relationship between the target terminal and the reference base station, the first positioning data comprises a cell identifier and navigation information, and the reference signal is sent by the reference base station via a communication satellite operating in a preset altitude range; and
determining position information of the target terminal from the first positioning data and second positioning data of a preset reference terminal, wherein the preset reference terminal is a terminal determined in advance with a fixed position, and the second positioning data represents a positional relationship between the preset reference terminal and the reference base station.

2. The terminal positioning method of claim 1, wherein acquiring the first positioning data of the target terminal corresponding to each reference base station from the reference signal sent by the at least one reference base station comprises:
extracting the reference signal to obtain a target Primary Synchronization Signal (PSS); and
based on the target PSS and the reference signal, determining the cell identifier and the navigation information corresponding to the target terminal.

3. The terminal positioning method of claim 2, wherein extracting the reference signal to obtain the target PSS comprises:
converting a preset number of sets of frequency-domain PSSs to obtain a first time-domain signal;
determining a coarse synchronization position in the reference signal from the first time-domain signal and the reference signal;
determining a fine synchronization position in an error range corresponding to the coarse synchronization position, a PSS corresponding to the fine synchronization position having a highest correlation with a second time-domain signal corresponding to a preset local signal; and
obtaining the target PSS based on the fine synchronization position, the fine synchronization position indicating a frame header position of the target PSS.

4. The terminal positioning method of claim 3, wherein determining the coarse synchronization position in the reference signal from the first time-domain signal and the reference signal comprises:
performing correlation processing on first sequences corresponding to the first time-domain signal and second sequences corresponding to the reference signal to obtain a first correlation magnitude corresponding to each point in the second sequences; and
comparing first correlation magnitudes with a preset threshold to determine the coarse synchronization position.

5. The terminal positioning method of claim 3, wherein determining the fine synchronization position in the error range corresponding to the coarse synchronization position comprises:
acquiring at least one reference position in the error range of the coarse synchronization position; and
determining the fine synchronization position in the error range from PSSs respectively corresponding to the coarse synchronization position and the reference position, and the second time-domain signal.

6. The terminal positioning method of claim 5, wherein determining the fine synchronization position in the error range from the PSSs respectively corresponding to the coarse synchronization position and the reference position, and the second time - domain signal comprises:
respectively performing correlation processing on a third sequence of the second time-domain signal and fourth sequences of the PSSs respectively corresponding to the coarse synchronization position and the reference position to obtain at least two second correlation magnitudes;
comparing the at least two second correlation magnitudes to obtain a target second correlation magnitude, the target second correlation magnitude being a maximum of the at least two second correlation magnitudes; and
determining a position corresponding to the target second correlation magnitude as the fine synchronization position.

7. The terminal positioning method of claim 3, further comprising:
before determining the fine synchronization position in the error range corresponding to the coarse synchronization position, performing a frequency search on the reference signal through the preset local signal, to determine a frequency offset value;
compensating for a first PSS corresponding to the coarse synchronization position based on the frequency offset value to obtain an updated first PSS; and
updating the coarse synchronization position based on the updated first PSS.

8. The terminal positioning method of claim 2, wherein determining the cell identifier and the navigation information corresponding to the target terminal based on the target PSS and the reference signal comprises:
determining a target Secondary Synchronization Signal (SSS) corresponding to the target PSS from the target PSS;
calculating based on the target PSS and the target SSS to obtain the cell identifier corresponding to the target terminal;
demodulating the reference signal to obtain the navigation information, wherein the navigation information comprises at least one of ephemeris information of the communication satellite or system information of the reference base station.

9. The terminal positioning method of any one of claims 1 to 8, wherein determining the position information of the target terminal from the first positioning data and the second positioning data of the preset reference terminal comprises:
based on the first positioning data and the second positioning data, determining a time difference relationship from the target terminal and the preset reference terminal to each reference base station; and
determining the position information of the target terminal from the time difference relationship.

10. A terminal, comprising:
at least one processor; and
a storage device having stored therein at least one computer program which, when executed by the at least one processor, causes the at least one processor to implement the terminal positioning method of any one of claims 1 to 9.

11. A computer readable storage medium having stored therein a computer program which, when executed by a processor, causes the processor to implement the terminal positioning method of any one of claims 1 to 9.
